# EUROPEAN PATENT APPLICATION

(11) **EP 4 667 912 A1**
(43) Date of publication of application: **24.12.2025**
(21) Application number: 24382658.3
(22) Date of filing: 18.06.2024
(51) Int. Cl.: G01N 21/69, G01N 21/76

(54) **ELECTROCHEMILUMINISCENCE GENERATION METHOD**

(71) Applicant: Fundación BCMaterials - Basque Center for Materials, Application and Nanostructures, 48940 Leioa Bizkaia (ES)
(72) Inventor: DEL CAMPO GARCIA, Francisco Javier, 48940 ALGORTA (ES)
(74) Representative: Galbaian S.Coop.

(57) **Abstract**

Electrochemiluminiscence generation method comprising the step of placing an aqueous liquid sample on an electrode system comprising at least one working electrode, one auxiliary electrode and optionally one reference electrode, the liquid sample comprising water, hydrogen peroxide, chloride ions, and a luminol or a derivative of luminol as an electrochemiluminiscent substance, and applying a potential at which at least one gas bubble is generated covering at least the working electrode, the gas bubble comprising chlorine, wherein the chlorine in contact with the water is transformed into hypochlorite, which oxidizes the luminol or the derivative of luminol giving rise to an electrochemiluminescence emission. Method for the detection or quantification of at least one analyte applying the electrochemiluminescence generation method.

## Description

### TECHNICAL FIELD

The present invention relates to electrochemiluminiscence methods, particularly, electrochemiluminescence generation and detection methods.

### PRIOR ART

Electrochemiluminescence (ECL) or electrogenerated chemiluminescence is the emission of light triggered by electrochemical processes. ECL presents advantages compared to chemiluminescence and fluorescence, such as better temporal and spatial control, and the absence of background illumination and emission. These features combined make ECL a very powerful analytical technique. The most commonly studied ECL systems are those of the Ru(bpy)₃²⁺ (bpy = 2,2'-bipyridyl)/ tripropylamine, and that of luminol / hydrogen peroxide. The ECL of the luminol/H₂O₂ system has always been known to be relatively low compared to other regenerable luminophores such as Ru(bpy)₃²⁺, which often limits the analytical applications and biosensing performance.

EP0525212A1 discloses a method of analysing a chemiluminescent substance comprising a three-electrode system in a liquid sample containing luminol as an electrochemiluminescent substance capable of chemiluminescence through electrolytic oxidation in the presence of H₂O₂. The document discloses that the potential to be applied must be at a potential below gaseous oxygen is generated through electrolysis of water, because gaseous oxygen negatively affects the signal and signal stability of the electrochemiluminescent event. Thus, the electrochemiluminescence obtained in the presence of oxygen gas bubbles is weak and the accuracy of the measurement is low.

### DISCLOSURE OF THE INVENTION

The object of the invention is to provide an electrochemiluminescence (ECL) generation method and a method for the detection and/or quantification of at least one analyte, as defined in the claims.

A first aspect of the invention relates to an ECL generation method comprising the following steps:
- placing an aqueous liquid sample on an electrode system, the electrode system comprising at least one working electrode, one auxiliary electrode and optionally one reference electrode, and the liquid sample comprising water, hydrogen peroxide, chloride ions and a luminol or a derivative of luminol as an electrochemiluminiscent substance; and
- applying a potential at which at least one gas bubble is generated covering the working electrode, wholly or in part, the gas bubble comprising chlorine, wherein the chlorine in contact with the water of the liquid sample is transformed into hypochlorite, which oxidizes the luminol or the derivative of luminol giving rise to an electrochemiluminescence emission.

A second aspect of the invention relates to a method for the detection or quantification of at least one analyte dissolved in a liquid sample applying the ECL generation method of the invention. The generated electrochemiluminescence emission is measured and translated by means of a calibration curve of ECL emission obtained from a standard sample or samples comprising different concentrations of the analyte.

As shown in the examples provided, the invention provides an enhanced electroluminescence of the luminol or luminol derivative. Chlorine evolving from the electrode system becomes hypochlorite in contact with the aqueous liquid media of the sample. Hypochlorite can then oxidize both luminol and hydrogen peroxide, leading to a strong and more stable ECL emission as the ECL emission is generated on the surface of the chlorine-containing bubble formed on the electrode. In the case of the chlorine bubble-induced electrochemiluminescence, light emission has been observed as far as 5 mm away from the surface of the electrode. Thus, the method of the invention generates much more light, allowing the use of the measuring of analytes in biosensors, also in transportable biosensors.

These and other advantages and features of the invention will become apparent in view of the figures and the detailed description of the invention.

### DESCRIPTION OF THE DRAWINGS

Fig.1A represents the conventional method for the generation of electrochemiluminescence of luminol in the presence of hydrogen peroxide.
Fig. 1B represents the chemical reaction that takes place according to one embodiment of the invention, where chloride is transformed into chlorine gas at the electrode. At the gas/electrolyte interface, chlorine becomes hypochlorite, which then can oxidise both luminol and hydrogen peroxide, leading to an enhanced emission (*hv* 425nm).
Fig. 2A represents a circular surface microelectrode, which surface diameter (2r) is smaller in size to that of its diffusion layer thickness, delta. The figure represents the diffusion layer as several halftoned regions of different chloride concentration in the vicinity of the electrode. Figure 2B represents a circular surface macroelectrode, which surface diameter (2r) is larger than or similar to the thickness of its diffusion layer. The diffusion layer is represented by different half-toned areas.
Fig.3 represents the chemical reaction that takes place according to one embodiment of the method of detection or quantification of glucose.
Fig.4 shows images obtained according to one embodiment of the invention.
Fig. 5. Detection of glucose using glucose oxidase in the presence of L-012, both in the absence and in the presence of chloride, and 1mg mL⁻¹ glucose oxidase at a 3mm glassy carbon disk, and at applied potentials of E1= 0.7 V vs. Ag/AgCI (LiCH₃COO 0.1M) and E2= 2.4 V vs Ag/AgCI (LiCH₃COO 0.1 M)
Fig 6: Electrochemiluminescence intensity as a function of H₂O₂ concentration in a solution containing 1 - 1000 micromolar H₂O₂ in the presence of 0.42 mM L-012 and 50 mM potassium chloride. Units are arbitrary units (a.u.) resulting from the integration of blue channel pixels in RGB image sequences taken by a smartphone.

### DETAILED DISCLOSURE OF THE INVENTION

The electrochemiluminescence generation method developed by the inventors comprises the following steps:
- a first step of placing a liquid sample covering an electrode system, the electrode system comprising at least one working electrode, one auxiliary electrode and one reference electrode. The liquid sample comprises water, hydrogen peroxide, chloride ions, and luminol or a derivative of luminol as an electrochemiluminiscent substance; and
- a second step of applying a potential at which at least one gas bubble is generated, the bubble covering the working electrode wholly or in part. The gas bubble comprises chlorine, wherein the chlorine when it contacts with the water of the liquid sample, it is transformed into hypochlorite, which oxidizes the luminol or the derivative of luminol giving rise to an electrochemiluminescence emission.

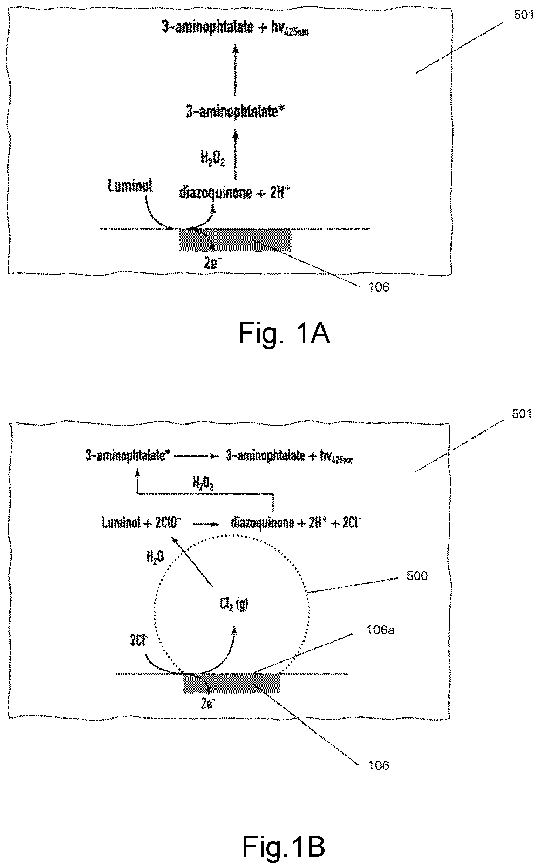

Fig. 1B shows the reaction occurred in the liquid sample 501 when a potential is applied and a gas bubble 500 is generated covering the surface 106a of the working electrode 106. The chemical reactions due to the polarization of the electrode system are the following:
Chloride can be turned into hypochlorite at high electrode potentials through the intermediate step of chlorine evolution, as per the following processes:

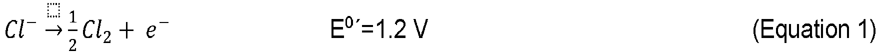

However, once chlorine bubble is formed, [1] the hypochlorite formation processes becomes relevant at the bubble-solution boundary:

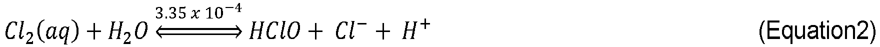

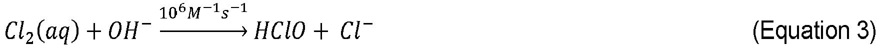

Rapidly followed by:

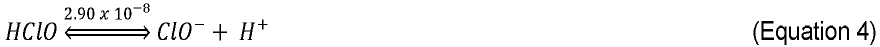

The mechanism of luminol oxidation leading to luminescent emission was studied in detail by Merenyi et al. in "Luminol chemiluminescence: Chemistry, excitation, emitter", J. Biolumin. Chemilumin. 5 (1990) 53-56. Table 1 summarizes the main kinetic constants involved in the reactions leading to Luminol electrochemiluminescence

**Table 1 - Summary of reported kinetics for the luminol/H₂O₂ system**

| **Reaction** | **Rate / equilibrium constant** | **Equation** |
|---|---|---|
| **Hydrogen peroxide equillibria** | | |
| 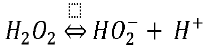 | Kₐ₅ = 2.4×10⁻¹² mol L⁻¹ | 5 |
| 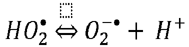 | Kₐ₆ = 1.58×10⁻⁵ mol L⁻¹ | 6 |

| **Main processes leading to photon emission** | | |
|---|---|---|
| 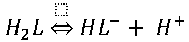 | Kₐ₁ = 1.8×10⁻⁷ mol L⁻¹ | 7 |
| 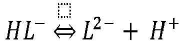 | Kₐ₂ = 6.3×10⁻¹⁵ mol L⁻¹ | 8 |
| HL˙ + HL˙ → 2L | 2*k₁*=1.8 × 10⁹ M⁻¹ s⁻¹ | 9 |
| L + HO₂⁻ → L⁻OOH | *k₄*=5.0 × 10⁷ M⁻¹ s⁻¹ | 10 |
| L⁻˙ + O₂⁻˙ → L⁻OOH | *k₃*=2.3 × 10⁸ M⁻¹ s⁻¹ | 11 |
| L⁻OOH → aminophthalate + N₂ + *hv* | *k₅*=2.5 × 10⁵ M⁻¹ s⁻¹ | 12 |

| **Other parallel reactions** | | |
|---|---|---|
| 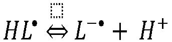 | Kₐ₃ = 2.0×10⁻⁸ mol L⁻¹ | 13 |
| L⁻˙ + L⁻˙ → 2L | 2*k₂*=5.0 × 10⁸ M⁻¹ s⁻¹ | 14 |

where *H₂L* is the neutral luminol species.

The HCIO resulting from hydrolysis of the electrogenerated chlorine can react with both species HL⁻ and HOO⁻, which enhances the emission, in this case at the bubble/liquid interface.

Thanks to the method of the invention, the ECL emission can be observed on the surface of the chlorine-containing bubble formed on the electrode 106, which extends several hundred microns beyond the electrode boundary or surface, in some cases, being at least up to 5 mm away from the surface of the electrode. Furthermore, the bubble continues to emit light, presumably until all chlorine inside the bubble is consumed. This enhanced light emission brings analytical advantages, such as improved detection limits and the possibility to use conventional cameras as detection systems.

In a preferred embodiment, the luminol derivate is a 8-Amino-5-chloro-7-phenylpyrido[3,4-d]pyridazine-1,4-(2H,3H)dione Sodium Salt), also known as L-012. This derivative produces brighter ECL at closer to a neutral pH, and therefore, has advantages for bioanalytical applications.

The ECL generation method therefore is applied with an electrode system sensor, for example, with an electrode system sensors produced by lithographic methods. This type of construction could be used, for example, to integrate the ECL generation method, in microfluidic environments. Such electrodes could be fabricated in gold, platinum, and even pyrolyzed photoresist films. In another embodiment, the electrodes could be screen-printed electrodes, using different conducting inks, such as silver, gold, and various carbon allotropes such as carbon black, graphite, carbon nanotubes, graphene, and glassy carbon. Such construction would enable the production of disposable electrodes in a wide range of form-factors.

In one embodiment, the sensor comprises an electrode system comprising three electrodes. The three electrodes can be contained within an enclosure. In a preferred embodiment, the enclosure is formed from of a nonconductive and nonreactive compound (e.g., a plastic or ceramic material). The enclosure may form a barrier between the sensor and the surrounding environment.

Depending on the electrode system, the liquid sample is a solution where the electrode system is immersed.

The electrode may be a microelectrode or a macroelectrode.

In the context of the invention, the term "microelectrode" means an electrode with surface dimensions equal to or less than 500 microns. Typically, microelectrodes used in electroanalytical chemistry are microdisks of diameter ranging from 5 to 100 microns. However, other geometries, such as microbands, micropillars, and microcyllinders could also be used as microelectrodes.

In the context of the invention, the term "macroelectrode" means an electrode with dimensions above 500 microns.

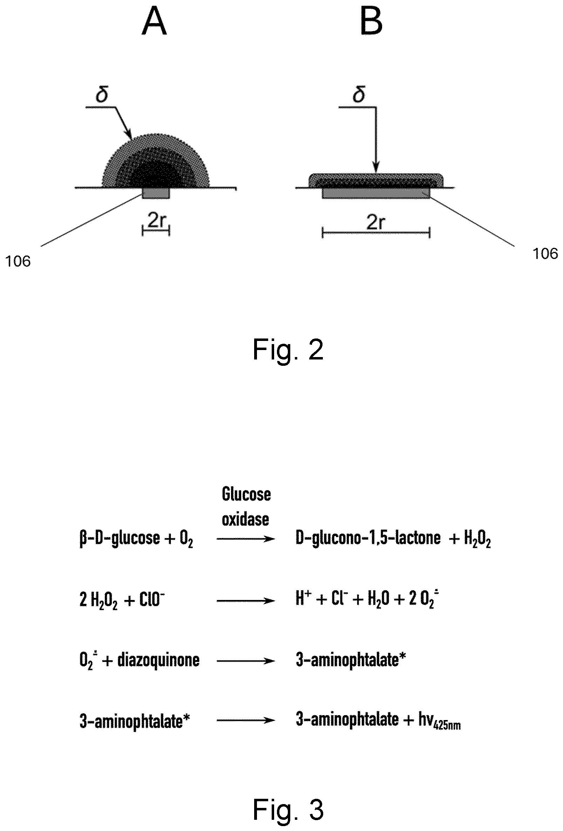

When applying the ECL generation method with a circular surface microelectrode as shown in Fig. 2A, the diameter (2r) of the working electrode 106 usually is smaller in size to that of its diffusion layer thickness delta, leading to a substantially semi sphere diffusion layer.

When applying the ECL generation method with a circular surface macroelectrode as shown in Fig. 2B, the diameter (2r) of the working electrode 106, usually is larger than or similar to the thickness that of its diffusion layer thickness delta, leading to a more planar diffusion layer.

The diffusion layer is the region in the vicinity of the electrode where a concentration gradient appears as a result, in this case, of the consumption of chloride at the electrode, and the concentration of chloride in the liquid sample or in the solution bulk.

Bubbles formed as a result of chlorine evolution will affect the diffusion layer, blocking it while the bubble remains attached to the electrode.

In a preferred embodiment, the reference electrode comprises or is made of Ag/AgCI or Ag, preferably, Ag/AgCI, more preferably, Ag/AgCI with internal solution of 0.1 M LiCH₃COO or 3M KCI.

In a preferred embodiment, the working electrode is made of or comprises graphite, graphene, carbon, carbon nanotubes, gold or platinum, preferably glassy carbon. The system of electrodes may comprise more than one working electrode.

In a preferred embodiment, the auxiliary electrode is made of or comprises graphite, graphene, carbon, carbon nanotubes, gold, platinum, preferably graphite.

Regarding the potential to be applied in order to generate a gas bubble, in a preferred embodiment the applied potential is between +1,35V and +2,5V vs Ag/AgCI, preferably + 2,4 V vs Ag/AgCI.

Regarding the chloride concentration of the liquid sample, in one embodiment, the aqueous liquid sample comprises chloride concentration between 1mM and 1M, preferably between 10 mM and 100 mM. The chloride source can be the chloride itself present in the liquid sample or, if necessary, by addition to the liquid sample until the desired concentration is achieved.

Regarding the luminol or derivative of luminol concentration, in one embodiment, the aqueous liquid sample comprises luminol or derivative of luminol concentration between 0.4 and 0.5 mM. In a preferred embodiment, the luminol or luminol derivative is added to the liquid sample to be analyzed.

Regarding the source of hydrogen peroxide, it may either be added to the liquid sample or, as in another embodiment, it may be present in the liquid sample as a product from a chemical or biochemical process, as it is described later.

The inventors have also found that when the liquid sample has a pH between 7 and 11, the chemical reaction in the liquid sample is improved, therefore, in one embodiment, the liquid sample has a pH between 6 and 11, preferably between 6,5 and 9.

The ECL emission can be detected with different means or devices, preferably being an Ultraviolet-Visible (UV-Vis) spectrophotometer, charge-coupled device (CCD) camera (reflex or mobile phone) or photomultipliers. Therefore, in one embodiment it is also an ECL generation and detection method.

Another aspect of the invention relates to a method of detection or quantification of at least one analyte applying the method of ECL generation of the invention, wherein the liquid sample comprises the analyte. The electrochemiluminescence emission as a result of the reactions that occur in the ECL generation method with the analyte is measured and translated by means of a calibration curve obtained from standard sample(s) comprising different concentrations of the analyte.

The ECL emission can be detected with different means or devices, preferably being an UV-Vis spectrophotometer, CCD camera (for example, reflex or mobile phone) or photomultipliers.

Because the ECL of luminol or the derivative of luminol involves the consumption of hydrogen peroxide, the method of the invention can be used to detect or quantify the concentration of hydrogen peroxide within a sample. Figure 1B schematizes the main reactions between hypochlorite and hydrogen peroxide, that contribute to the ECL signal enhancement.

Hypochlorite is a highly oxidising species that not only can oxidise luminol (see Fig. 1B), but it can also react with hydrogen peroxide to produce highly reactive oxygen species (ROS).

Considering that the hydrogen peroxide is involved in many biosensors, in one embodiment, the electrode system involves at least one enzyme, preferably, an oxidase enzyme, that reacts with the analyte generating hydrogen peroxide as a by-product. Thus, enzyme reacts with the analyte producing the hydrogen peroxide as a by-product that will be the source of the hydrogen peroxide of the liquid sample that it is involved in the ECL emission of the ECL generation method. The oxidase enzyme can be any oxidoreductase.

In a preferred embodiment, the at least one enzyme is added or is present in the liquid sample or solution bulk.

In one embodiment, the enzyme is a glucose oxidase. This enzyme is commonly used in glucose biosensors for the diagnostic and control of diabetes mellitus. Glucose oxidase transforms *β*-D-glucose into gluconic acid in the presence of oxygen, preferably dissolved in the liquid sample, and produces hydrogen peroxide as a by-product, as shown in Fig. 3.

The liquid sample may be a sample obtained from any liquid biological sample to be tested, like serum, plasma, blood or a food sample. The liquid sample may be treated or processed before using it in the method.

### Examples

Some illustrative examples which clearly show the features and advantages of the invention are described below. However, these examples must not be interpreted as limiting the object of the invention as defined in the claims.

Example 1. Image captures of 25 µm disk microelectrode.

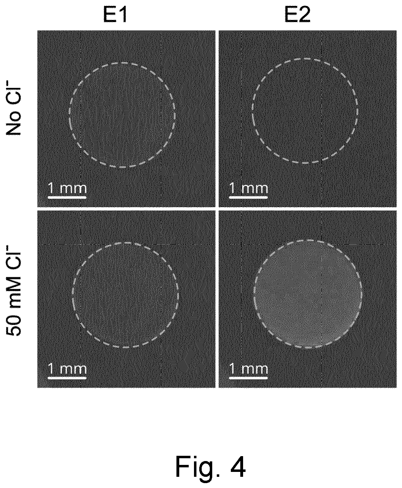

Fig. 4 shows images from a 25 µm disk gold microelectrode in a solution containing 0,42 mM (millimolar) of L-012 and 500 mM of H₂O₂. In 0,25 M phosphate buffer (pH = 8), in the absence (top) and in the presence of 50 mM chloride (bottom) during potential step experiments at 0,7V (E1) and 2,4 V (E2) vs Ag/AgCl. All scale bars represent 100 µm in length and 25 µm in width.

The microelectrode was immersed in solution facing down to prevent the bubbles from escaping, and thus facilitate image capture through the cell glass. A Canon EOS77D coupled to an Oshiro 60 mm f/2,8 2:1 LD UNC Ultra -Macro, a 118 mm below mounting a 10-diopter lens. Images were captured with a sensitivity equivalent to ISO-12800 and 4s exposure using Canon EOS Utility software run from a PC running Windows 10.

The photos show that the emission observed at E1 is comparable for both chloride containing (bottom) and chloride-free (top) solutions. At E2, on the other hand, bubbles are formed in both cases. However, while no emission is observed in the absence of chloride (oxygen bubble), a strong ECL emission is observed in the presence of solution chloride. Although gas bubbles are formed in both cases at a higher potential, E2=2.4 V, in the absence of chloride, bubbles contain oxygen and no ECL emission is observed. However, in the presence of solution chloride, bubbles contain mainly chloride and some oxygen, resulting in a strong ECL emission.

### Example 2. Detection of hydrogen peroxide according to one embodiment of the invention

The detection of hydrogen peroxide, H₂O₂, has been carried out in a solution containing 0,4-0,5 mM (millimolar) L-012 and 50 mM chloride ions in a 0,25 M phosphate buffer at pH=8. The working electrode was a 25-micron gold disk electrode, the auxiliary electrode was a Pt plate, and the reference electrode was Ag/AgCI (0,1M LiCH₃COO). In this embodiment, the detector has been a UV-Vis spectrometer, and the electrochemiluminescence emission has been captured by an optical fibre placed approximately 200 microns away from the working electrode surface. Specifically, SPELEC UV-Vis spectroelectrochemistry station (Metrohm-DropSens, ES) controlled by DropView SPELEC software (version 3.0), installed on a PC running Windows 10 was used to both control the electrode potential and to record the ECL signal. To maximise the signal, an integration time of 500 ms was used in the spectrophotometric settings. This means that one spectrum has been collected every 500 ms during the experiment. Regarding the electrode potential, this was scanned linearly at a rate of 100 mV per second between 0V and 3V vs Ag/AgCl (0.1M LiCH₃COO). The ECL signal was analysed by plotting the emitted light at 420 nm as a function of potential. Hydrogen peroxide additions were made in order to build a calibration curve. Following each addition, the ECL signal was measured at 2,4 V vs Ag/AgCI (0,1M LiCH₃COO) and plotted versus the concentration of hydrogen peroxide. A limit of detection 10 micromolar H₂O₂ has been reached. Two linear regions were identified. One between 10 and 100 micromolar H₂O₂, and a second one between 100 micro molar and 1 millimolar H₂O₂.

### Example 3. Detection of hydrogen peroxide according to another embodiment of the invention

The used materials have been according to example 2, except to the detector, that it has been a camera instead of a photodetector. In this case the electrode was polarized at a constant potential of 2,4 V for 20 seconds with a Autolab PGSTAT101 (Metrohm-DropSens, ES) controlled by NOVA 2.1 software installed on a PC running Windows 10. Single bubble images were captured using a Canon EOS77D reflex camera coupled to an Oshiro 60 mm f/2.8 2:1 LD UNC Ultra -Macro, a 118 mm bellow mounting a 10 diopter lens. Images were captured with a sensitivity equivalent to ISO-12800 and an exposure time of 4s using Canon EOS Utility software run on a PC running Windows 10. In this case, a customized cell was produced with a flat glass bottom, so that the camera objective could approach more easily. As in the previous embodiment, hydrogen peroxide additions have been followed by electrode polarization and image capture. Following the experiments, the images were analyzed using imaged software and a custom Python script. In brief, the intensity of the blue pixels in the frame throughout the experiment was added and plotted versus hydrogen peroxide concentration.

### Example 4. Detection of hydrogen peroxide according to one embodiment of the invention

In another embodiment, the working electrode has been a 3mm glassy carbon electrode, the auxiliary electrode was a Pt plate, and the reference electrode was Ag/AgCI (0.1M LiCH3COO). In this case, images have been taken using a smartphone and an adapted macro-lens. In our case, an Honor Magic 4 Lite 5G smartphone with an attached x24 macro lens (Apexel, Amazon, ES) was used. In this embodiment, the same cell was used as in the case of the example 3 described above. Image analysis was carried out using imaged software and a custom Python script, and total intensity of blue pixels was plotted versus hydrogen peroxide concentration. Similar detection limits were found compared to the case of the spectrometer.

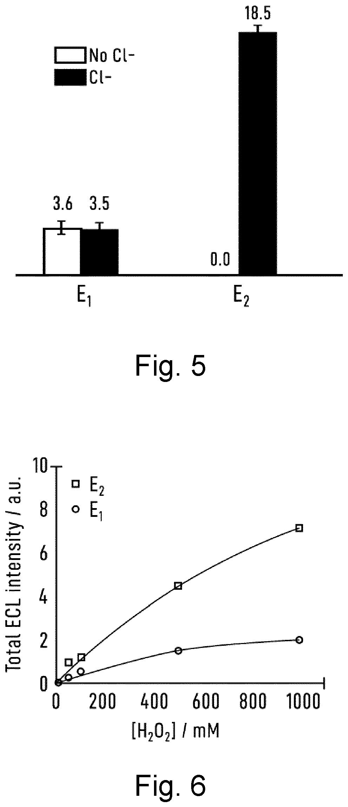

Fig. 6 shows the Electrochemiluminescence intensity as a function of H₂O₂ concentration in a solution containing 1 - 1000 micromolar H₂O₂ in the presence of 0.42 mM L-012 and 50 mM potassium chloride. Emission was captured using a mobile phone camera. Units are arbitrary units (a.u.) resulting from the integration of blue channel pixels in RGB image sequences taken by the smartphone.

### Example 5: Glucose detection.

The detection of glucose is based on the detection of hydrogen peroxide produced by enzyme glucose oxidase in the presence of glucose and dissolved oxygen in the bulk solution. For this, a solution containing 1mg / mL glucose oxidase at pH=8 in 0,25 M phosphate buffer was prepared. L-012 was present at a concentration of 0,42 mM, and chloride was present at 50 mM concentration. The electrode system or set was:
- Working electrode: 3 mm glassy carbon disk
- Reference electrode: Ag/agCl (0,1M LiCH₃COO)
- Auxiliary electrode: 5x5 mm Pt foil.

In this embodiment, glucose was added at a concentration of 1mM to the bulk solution, and the electrode system was polarized at 2,4 V for 20 seconds with a Autolab PGSTAT101 (Metrohm-DropSens, ES) controlled by NOVA 2.1 software installed on a PC running Windows 10. Images were captured using a Canon EOS77D reflex camera coupled to an Oshiro 60 mm f/2.8 2:1 LD UNC Ultra -Macro, a 118 mm bellow mounting a 10 diopter lens. Images were captured with a sensitivity equivalent to ISO-12800 and an exposure time of 4s using Canon EOS Utility software run on a PC running Windows 10. Captured images were processed and analyzed using imaged open software and a custom Python script. The process involves converting the images into 8-bit RGB, separating the three color channels, and analyzing the blue channel only. The analysis consisted in adding the intensities of the blue channel throughout the experiment duration, and representing the resulting value versus glucose concentration.

Fig. 5 shows a bar chart summarizing the results from this experiment. It can be seen that while at the conventional potential of 0.7V, the presence of chloride makes next to no difference, at 2.4V chloride induces a signal enhancement corresponding to an emission 5 times more intense than that observed at the lower potential.

## Claims

1. Electrochemiluminiscence generation method comprising the following steps:
- placing an aqueous liquid sample on an electrode system comprising at least one working electrode, one auxiliary electrode and optionally one reference electrode, the liquid sample comprising water, hydrogen peroxide, chloride ions, and a luminol or a derivative of luminol as an electrochemiluminiscent substance; and
- applying a potential at which at least one gas bubble is generated covering at least the working electrode, the gas bubble comprising chlorine, wherein the chlorine in contact with the water is transformed into hypochlorite, which oxidizes the luminol or the derivative of luminol giving rise to an electrochemiluminescence emission.

2. Electrochemiluminiscence generation method according to claim 1, wherein the derivative of luminol is 8-Amino-5-chloro-7-phenylpyrido[3,4-d]pyridazine-1,4-(2H,3H)dione Sodium Salt)

3. Electrochemiluminiscence generation method according to claim 1 or 2, wherein the reference electrode comprises Ag/AgCI or Ag.

4. Electrochemiluminiscence generation method according to any of the preceding claims, wherein the working electrode is made of or comprises graphite, graphene, carbon, carbon nanotubes, gold or platinum.

5. Electrochemiluminiscence generation method according to any of the preceding claims, wherein the counter electrode is made of or comprises graphite, graphene, carbon, carbon nanotubes, glassy carbon, gold or platinum.

6. Electrochemiluminiscence generation method according to any of the preceding claims, wherein the applied potential is between +1,35V and +2,5V vs Ag/AgCI, preferably +2,4V vs Ag/AgCI.

7. Electrochemiluminiscence generation method according to any of the preceding claims, wherein the aqueous liquid sample comprises chloride concentration between 1mM and 1M, preferably between 10 mM and 100 mM.

8. Electrochemiluminiscence generation method according to any of the preceding claims, wherein the aqueous liquid sample has a pH between 6 and 11, preferably between 6,5 and 9.

9. Method for the detection or quantification of at least one analyte applying the method according to any of the preceding claims, wherein the aqueous liquid sample comprises the analyte and the electrochemiluminescence emission is measured and translated by means of a calibration curve obtained from standard samples comprising different concentrations of the analyte.

10. Method according to claim 9, wherein the analyte is hydrogen peroxide.

11. Method according to claim 9 or 10, wherein the analyte reacts with at least one enzyme that produces hydrogen peroxide as a by-product that reacts with the hypoclorite which oxidizes the luminol or the derivative of luminol giving rise to the electrochemiluminescence emission

12. Method according to claim 11, wherein the enzyme is selected from an oxidoreductase.

13. Method according to claim 11 or 12, wherein the analyte is glucose, and the enzyme is a glucose oxidase.

14. Method according to any of claims 9 to 13, wherein the liquid sample is a biological sample, preferably selected from serum, plasma or blood, or a liquid food sample.

15. Method according to any of claims 9 to 14, wherein the electrochemiluminescence emission is measured by means of ultraviolet-visible spectrophotometer, charge-coupled device camera or photomultipliers.
